# EUROPÄISCHE PATENTSCHRIFT

(11) **EP 3 825 799 B1**
(45) Veröffentlichungstag und Bekanntmachung des Hinweises auf die Patenterteilung: **07.06.2023**
(21) Anmeldenummer: 19211167.2
(22) Anmeldetag: 25.11.2019
(51) Int. Cl.: G05B 23/02

(54) **VERFAHREN UND VORRICHTUNG ZUR AKUSTISCHEN ÜBERWACHUNG VON INDUSTRIEANLAGEN**
METHOD AND DEVICE FOR ACOUSTIC MONITORING OF INDUSTRIAL SYSTEMS
PROCÉDÉ ET DISPOSITIF DE SURVEILLANCE ACOUSTIQUE D'INSTALLATIONS INDUSTRIELLES

(43) Veröffentlichungstag der Anmeldung: 26.05.2021
(73) Patentinhaber: Primetals Technologies Austria GmbH, 4031 Linz (AT)
(72) Erfinder: Husakovic, Adnan, 4150 Rohrbach (AT); Mayrhofer, Anna, 4722 Peuerbach (AT); Jax, Klaus, 4202 Hellmonsödt (AT); Hartl, Franz, 4720 Kallham (AT); Rohrhofer, Andreas, 4070 Eferding (AT)
(74) Vertreter: Metals@Linz

(56) Entgegenhaltungen:
- US-A1- 2014 133 981
- US-A1- 2019 086 311

## Beschreibung

### Gebiet der Technik

Die vorliegende Erfindung betrifft das Gebiet von Industrieanlagen.

Einerseits betrifft die Erfindung ein Verfahren zur akustischen Überwachung von Industrieanlagen, wobei durch einen Messaufnehmer ein akustisches Signal erfasst wird.

Andererseits betrifft die Erfindung eine Vorrichtung zur akustischen Überwachung von Industrieanlagen.

Des Weiteren betrifft die Erfindung auch die Verwendung der Vorrichtung.

Die Erfindung umfasst auch ein Computerprogramm, welches das Verfahren zur akustischen Überwachung einer Industrieanlage ausführt.

Ein weiterer Gegenstand der Erfindung ist ein Computerlesbares Medium, welches das Computerprogramm speichert.

### Stand der Technik

Die Überwachung von Industrieanlagen stellt eine immer wichtigere Aufgabe dar. Eine Produktionsanlage kann während des Betriebes Fehlfunktionen, welche nicht immer auf den ersten Blick ersichtlich sind, aufweisen. Des Weiteren können sich auftretende Fehlfunktionen bereits in einem frühen Stadium bemerkbar machen, noch bevor dies einen großen Einfluss auf die Produktion hat. Es ist deshalb wünschenswert, bereits in einem frühen Stadium, Fehlfunktionen erkennen zu können. Bei Produktionsanlagen treten im Laufe der Zeit auch Verschleißerscheinungen auf, die zu einer späteren Fehlfunktion führen. Diese Verschleißerscheinungen führen nicht sofort zu einer Fehlfunktion, sondern verstärken sich im Laufe der Zeit. So können beispielsweise im fortgeschrittenen Verschleißstadium vorgegebene Toleranzbereiche in der Produktion nicht mehr zuverlässig eingehalten werden. Wenn solche Verschleißerscheinungen erkannt werden, ermöglicht dies dem Anlagenbetreiber entsprechende Wartungsmaßnahmen vorzunehmen oder diese frühzeitig einplanen zu können - noch bevor Ausschussprodukte produziert werden. Eine weitere Überwachungsaufgabe ist beispielsweise zu überprüfen, ob bestimmte Zwischenschritte richtig ausgeführt wurden.

Die US20190086311 A1 beschreibt eine Anordnung mit einem Schallemissionssensor, welcher mit einer Fluidflusssteuerungsanordnung gekoppelt ist, um einen Zustand der Fluidflusssteuerungsanordnung zu erhalten.

Die US20140133981A1 beschreibt ein Monitoringsystem für Windturbinen. Das Monitoringsystem beinhaltet ein Mikrophon zum Erfassen von akustischen Emissionen. Das Monitoring vergleicht einen Pegel eines empfangenen akustischen Signals mit einem Grenzwert und generiert einen Alarm, wenn der Pegel eines empfangenen akustischen Signals den Grenzwert überschreitet.

### Zusammenfassung der Erfindung

Die Aufgabe der vorliegenden Erfindung besteht darin ein Verfahren zur Verfügung zu stellen, welches eine Industrieanlage zuverlässig überwachen kann und in einem frühen Stadium auf Fehlfunktionen oder Veränderungen hinweisen kann.

Die Aufgabe wird dadurch gelöst, dass das durch den Messaufnehmer erfasste akustische Signal als Zeitsignal in einem Speicher abgespeichert wird. Mit Hilfe eines adaptiven Filters wird, aus dem zumindest einen Zeitsignal, zumindest ein Auswertesignal berechnet und jeweils im Speicher abgespeichert.

Aus dem zumindest einen Auswertesignal wird für zumindest einen bestimmten Zeitpunkt, bevorzugt für alle, zumindest ein Leistungsdichtespektrum Signal berechnet.

Für das - zumindest eine - Leistungsdichtespektrumssignal wird durch schwellwertbasierte Auswertung in einem vordefinierten Frequenzband ein Schwellwert bestimmt und bei über- oder unterschreiten eines Grenzwertes wird ein Alarm ausgegeben. Das Zeitsignal wird für eine bestimmte Dauer erfasst. Die Dauer ist beispielsweise abhängig von der Dauer eines zu überwachenden Arbeitsschrittes, der Betriebsdauer, dem Zeitraum in welchem ein zu erwartender Verschleißzustand auftritt oder andere für den Überwachungsvorgang spezifische Kriterien.

Das Leistungsdichtespektrum wird für bestimmte Zeitpunkte und über ein gewisses Zeitfenster berechnet. Es werden beispielsweise die Leistungsdichtespektren immer für ein Zeitfenster von 50ms berechnet.

Der adaptive Filter wird dem jeweiligen Betriebszustand angepasst. Je nach Betriebszustand können unterschiedliche Komponenten der Industrieanlage im Einsatz sein, wodurch auch Filterparameter - entsprechend des zu erwartenden akustischen Signals - angepasst werden.

Im Zusammenhang mit dieser Erfindung wird unter schwellwertbasierter Auswertung verstanden, dass ein Schwellwert - welcher ein charakteristisches Merkmal des Signals darstellt - mit einem oberen und / oder unteren Grenzwert verglichen wird. Dies kann beispielsweise sein, dass eine Frequenz - bei welcher eine Maximale Leistungsamplitude auftritt - mit einem oberen und / oder unteren Schwellwert verglichen wird.

Jede Industrieanlage hat während des Betriebes charakteristische Eigenschaften. Eine intakte Industrieanlage weist beispielsweise in einem bestimmten Frequenzbereich die größte Leistungsamplitude auf - was als eine charakteristische Frequenz interpretiert werden kann. Diese charakteristische Frequenz kann für die Industrieanlage bestimmt werden. Dies kann beispielsweise dadurch geschehen, dass bei der Inbetriebnahme Referenzmessungen durchgeführt werden.

Es ist aber denkbar, dass aufgrund von Umgebungsgeräuschen an einer höheren oder niedrigeren Frequenz eine größere Amplitude auftritt. Des Weiteren ist es möglich, dass eine Industrieanlage mehrere charakteristische Frequenzen aufweist, wobei aber manche nicht charakteristisch für eine mögliche Fehlfunktion sind. Verschiedene Prozessphasen oder Betriebspunkte der Anlage können auch zu unterschiedlichen charakteristischen Frequenzen führen. Für die Auswertung kann deshalb ein Frequenzband vordefiniert werden, in welchem das lokale Maximum bestimmt wird. Die Referenzwerte müssen für jede Industrieanlage spezifisch festgelegt werden. Je nachdem welche Toleranzen bei der jeweiligen Produktion festgelegt werden, ist eine zulässige Frequenzverschiebung kleiner oder größer gegenüber der charakteristischen Frequenz. Wenn die Auswertung durch die Differenzbildung von charakteristischen Frequenzen zumindest zweier Leistungsdichtespektrum Signale erfolgt, wird die vorbestimmte zulässige Differenz nach den zulässigen Toleranzen des zu überwachenden Produktionsschritt, der zu überwachenden Anlage usw. festgelegt. Die zulässige Differenz ergibt sich meistens aus Erfahrungswerten oder wird in Versuchen festgelegt.

Das adaptive Filter ist ein Linear Predictive Coding (LPC) Filter. Dieser wird durch das Linear Predictive Coding (LPC) Verfahren festgelegt.

Das Linear Predictive Coding ist ein Verfahren der Audiosignal- und Sprachverarbeitung. Das LPC Verfahren findet überwiegend Anwendung bei digitaler Sprachübertragung, Sprachkompression, Spracherkennungssystemen und musikalischen Anwendungen. Für die Überwachung von Industrieanlagen oder Maschinen ist es bis dato nicht bekannt. Die Auswertung mit diesem Verfahren hat sich als besonders effektiv herausgestellt. Durch die Berechnung des Zeitsignals - mit dem Linear Predictive Coding Verfahren - lassen sich spektrale Spitzen und harmonische Strukturen leichter bestimmen. Eine Ordnung mit welchem das Linear Predictive Coding Verfahren den adaptiven Filter festlegt, ist maßgeblich, um ein zuverlässiges Verfahren zur Überwachung zu erhalten. Bei niedriger Ordnung werden durch das LPC Signal stark ausgeprägte Resonanzen ersichtlich. Je höher die Ordnung, desto klarer können harmonische Spitzen bestimmt werden. Eine zu hohe Wahl der Ordnung führt zu rauschen.

Zum Feststellen der Ordnung wird von einem oder mehreren beispielhaften Zeitsignalen eine Fourier-Transformation (FFT) durchgeführt. Zusätzlich werden von diesen Zeitsignalen mit dem LPC Verfahren einige Auswertesignale mit verschiedensten Ordnungen bestimmt und mit den jeweiligen Fourier-Transformationen verglichen. Die Ordnung, bei der die Auswertesignale die Fourier-Transformation am besten durch eine Hüllkurve repräsentieren, wird für weitere Analysen herangezogen. Um die Annäherung zu verbessern, können weitere Auswertesignal mit verschiedenen naheliegenden Ordnungen bestimmt werden, um rekursiv die optimale Ordnung für das Auswertesignal zu bestimmen.

In einer bevorzugten Ausführungsform erfolgt die schwellwertbasierte Auswertung durch zumindest eine der nachfolgenden Methoden: Bestimmung eines Median aus zumindest zwei Leistungsspektrum Signalen, Bestimmung einer spektralen Bandweite, Bestimmung einer spektralen Roll Off Frequenz, Bestimmung eines Effektivwertes (RMS Energie) des Signals oder Bestimmung einer spektrale Schärfe.

Im Falle der Bildung des Medians stellt dieser die repräsentative Frequenz dar. Durch die Bildung des Medians hat sich eine verbesserte und zuverlässigere Auswertung ergeben.

Der Vorteil an der Verwendung des Medians ist die Minimierung des Einflusses von Ausreißern. Zum einen werden durch die Anwendung des Medians über mehrere aufeinanderfolgenden zeitlichen Sequenzen die Daten gemittelt, andererseits ist der Median im Vergleich zu anderen Methoden - wie beispielsweise Bildung des Mittelwertes - zur Mittelung robuster gegenüber Ausreißern.

Unter der Roll Off Frequenz versteht man jene Frequenz, an dem das temporäre Leistungsdichtespektrum 80-90% der Signalleistung beträgt. Unter der spektralen Bandweite versteht man eine temporäre Standardabweichung einer Frequenz bezogen auf eine momentane Mittenfrequenz.

Durch Auswertung der Roll Off Frequenz kann beispielsweise das Auftreffen von einem Düsenstrahl auf eine glatte Oberfläche erkannt werden. Bei Abreinigungsvorgängen von Air Knifes ergibt sich ein gewisses spektrales Muster, was an einer charakteristischen Frequenz, sowie dessen zeitlichem Verhalten ersichtlich ist. Diese sind durch Auswertung der spektralen Roll Off Frequenz bzw. der spektralen Bandweite über mehrere Leistungsdichtespektren ersichtlich.

Der Effektivwert eignet sich besonders gut, um festzustellen, ob beispielsweise ein Düsenstrahl ungehindert auf eine Oberfläche auftrifft oder ob er beispielsweise seitlich begrenzt wird. Ein Beispiel ist, wenn Baffles eines Air Knifes aktiv sind. Die Baffles dienen dazu Effekte, die durch Oberflächenspannung besonders am Rand des Metallbandes entstehen, zu minimieren. Im Bereich des Air Knifes wird das Metallband an beiden Seiten durch Baffles verbreitert, sodass künstlich ein breiteres Band entsteht.

Unter der spektralen Schärfe wird das Verhältnis von arithmetischem zum geometrischen Mittelwert verstanden. Diese Methode eignet sich besonders um einen Abstand - von einem Düsenstrahl zu einer Oberfläche - zu ermitteln. Eine weitere Anwendung ist einen Winkel der Düse zum Werkstück - auf welches der Düsenstrahl auftritt - zu ermitteln.

Eine vorteilhafte Ausführungsform sieht vor, dass der Schwellwert mit einem Referenzwert verglichen wird und daraus ein kontinuierlicher Betriebsparameter oder Betriebszustand berechnet wird. Diese Ausführung hat den Vorteil, dass aus einem Schwellwert zu einem gewissen Zeitpunkt der weitere Verlauf des Betriebsparameters bestimmt werden kann. Es kann also beispielsweise aufgrund der Referenzwerte vorausgesagt werden, wann die nächste Wartung fällig bzw. ob eine Fehleinstellung vorhanden ist.

Eine zweckmäßige Ausführungsform sieht vor, dass die Industrieanlage ein Air Knife ist und ein Betriebsparameter ein Winkel des Air Knife ist.

Air Knifes kommen unter anderem in der Stahlherstellung zum Einsatz um pures Zink oder verschiedenste Kombinationen von Legierungen vom Metallband, welches ein Metallbad verlässt, abzustreifen. Die Verwendung von Air Knifes ermöglichen ein hohes Maß an Genauigkeit und Kontrolle einer Metallbeschichtung und decken ein breites Feld von verschiedensten Beschichtungsarten ab.

Die korrekte Einstellung des Air Knifes hat einen wesentlichen Einfluss auf die Qualität der Oberfläche. Falsche Einstellungen des Air Knifes können durch die dabei entstehenden Geräusche erkannt werden.

Akustische Analysen ermöglichen eine Erkennung von falschen Einstellungen verschiedenster Parameter, wie beispielsweise Auftrittswinkel des Strahles auf das Metallband, Druck, Abstand des Air Knife zum Metallbad und Abreinigungszeitintervalle des Air Knifes. Eine Abschätzung bzw. Bestimmung der Parameter können ebenfalls durchgeführt werden.

Eine vorteilhafte Ausführung sieht vor, dass der Schwellwert mit einem Referenzwert verglichen wird und Filterparameter des adaptiven Filters entsprechend angepasst werden. Diese Ausführung ermöglicht beispielsweise bestimmte Betriebszustände der Industrieanlage zu erkennen und dann den adaptiven Filter entsprechend anzupassen. Ein Beispiel hierfür ist beim Air Knife wenn der Baffle aktiv ist. Dies kann beispielsweise durch die Auswertung des Effektivwertes erkannt werden. Wenn das Baffle aktiv ist wird der Filter in seiner Bandbreite entsprechend verändert, um die zu überwachenden Parameter des Air Knifes zuverlässig überwachen zu können.

Eine besondere Ausführungsform sieht vor, dass der Grenzwert sich während einer Dauer der Überwachung verändert.

Es ist beispielsweise denkbar, dass nur bestimmte Komponenten der Industrieanlage, welche besonders verschleißanfällig sind überwacht werden sollen. Die gesamte Industrieanlage weist aber noch weitere Komponenten auf, welche ebenfalls ihr Verhalten im Laufe des Betriebes der Industrieanlage verändern. Dies kann dazu führen, dass auch Grenzwerte während der Dauer der Überwachung sich verschieben. Das erfasste akustische Signal kann sich also - aufgrund nicht überwachter Komponenten der Industrieanlage - verändern. Die Grenzwerte werden aufgrund von Erfahrungswerten oder Referenzwerten - welche im Speicher abgelegt sind - automatisch angepasst.

Eine bevorzugte Ausführungsform sieht vor, dass das akustische Signal als abgetastetes Signal mit einer Abtastrate von zumindest 44100 Hz erfasst wird. Dies entspricht in etwa dem doppelten der hörbaren Frequenz und somit dem doppelten der Nyquistfrequenz für den hörbaren Bereich.

Die erfindungsgemäße Aufgabe wird auch durch die eingangs genannte Vorrichtung gelöst. Eine Auswerteeinrichtung ist mit dem Messaufnehmer und dem Speicher verbunden, wobei die Auswerteeinrichtung das zuvor beschriebene Verfahren ausführt. Diese Vorrichtung eignet sich besonders für eine zuverlässige Überwachung von Industrieanlagen. In Versuchen hat sich gezeigt, dass eine genaue Vorhersage von Fehlfunktionen in Industrieanlagen durch diese Vorrichtung erfolgen kann.

Neben dem erfindungsgemäßen Verfahren und der Vorrichtung wird die Aufgabe auch durch die Verwendung der Vorrichtung zur Überwachung von Anlagen, oder Produktionsprozessen in Industrieanlagen für ein Air Knife oder ein Spannwellensieb gelöst.

Siebe kommen in den unterschiedlichsten Produktionsstätten zum Einsatz, um feinkörniges bzw. sandiges Material abzusondern. Durch die unterschiedliche Beschaffenheit der Materialien werden unterschiedliche Siebe verwendet. Spannwellensiebe sind eine optimale Lösung für extrem schwer sieb bare Siebgüter. An zwei bewegten Rahmen sind Siebquerträger montiert. Darauf befestigte flexible Siebmatten werden mechanisch alternierend gespannt und gelockert. Höchste Beschleunigungskräfte und das Spannen der Siebmatten verhindern das Verstopfen und Verkleben des Siebbelages mit Material.

Diese mechanischen Kräfte führen aber auch zu einem Verschleiß der Siebe. Um einen optimalen Prozess zu garantieren, sollten Verschleißerscheinungen, wie beispielsweise ein Durchbruch eines Siebes oder auch der Bruch einer Seitenwand, ehestmöglich erkannt und behoben werden. Durch die erfindungsgemäße Vorrichtung können solche Verschleißerscheinung frühzeitig erkannt werden.

Air Knifes kommen unter anderem in der Stahlherstellung zum Einsatz um pures Zink oder verschiedenste Kombinationen von Legierungen vom Metallband, welches beispielsweise ein Verzinkungsbad verlässt, abzustreifen.

Die Aufgabe wird weiterhin gelöst durch ein Computerprogramm umfassend Befehle, die bewirken, dass die zuvor beschriebene Vorrichtung die oben erläuterten Verfahrensschritte ausführt.

Die Aufgabe wird auch durch ein Computerlesbares Medium, auf dem das Computerprogram gespeichert ist, gelöst.

### Kurze Beschreibung der Zeichnungen

Fig. 1 ist ein Ablaufdiagramm des erfindungsgemäßen Verfahrens gezeigt.
Fig. 2 ist die schematische Anordnung eine Air Knifes gegenüber einem Metallband
Fig. 3 Leistungsdichtespektrum eines Air Knifes
Fig. 4 Beispiel für schwellwertbasierte Auswertung
Fig. 5 Beispiel für schwellwertbasierte Auswertung mithilfe des Medians
Fig. 6 Beispiel für schwellwertbasierte Auswertung mithilfe der Spektralen Schärfe

### Beschreibung der Ausführungsformen

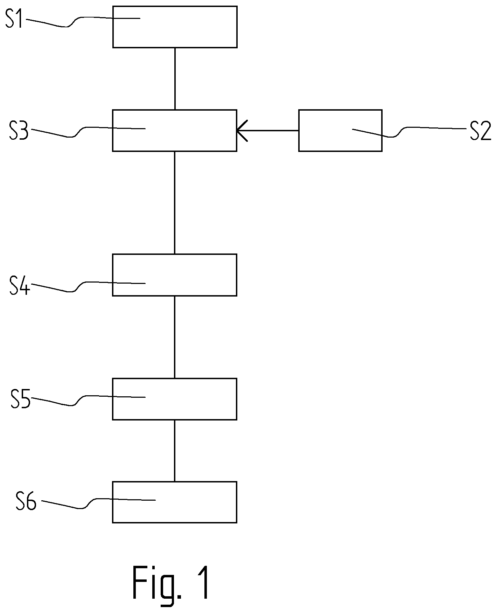

In Fig. 1 ist ein Ablaufdiagramm, wie ein erfindungsgemäßes Verfahren ausgeführt werden kann, dargestellt.

Im Arbeitsschritt S1 wird ein akustisches Signal erfasst. Im nächsten Arbeitsschritt S2 werden Filterparameter für ein adaptives Filter vorgegeben. Das adaptive Filter ist ein Linear Predictive Coding Filter(LPC). Diese Filterparameter werden entweder je nach Verfahrensschritt der Anlage vorgegeben oder werden laufend anhand sonstiger Ergebnisse bestimmt oder angepasst. Im Arbeitsschritt S3 wird aus dem erfassten akustischen Signal mittels des adaptiven Filters ein Auswertesignal berechnet. Im Arbeitsschritt S4 wird zumindest ein Leistungsspektrum Signal berechnet. Im Arbeitsschritt S5 erfolgt dann eine schwellwertbasierte Auswertung des Leistungsspektrum Signals. Im Arbeitsschritt S6 wird die schwellwertbasierte Auswertung dann angezeigt und bei einer Über- oder Unterschreitung des Schwellwertes wird ein Alarm ausgegeben.

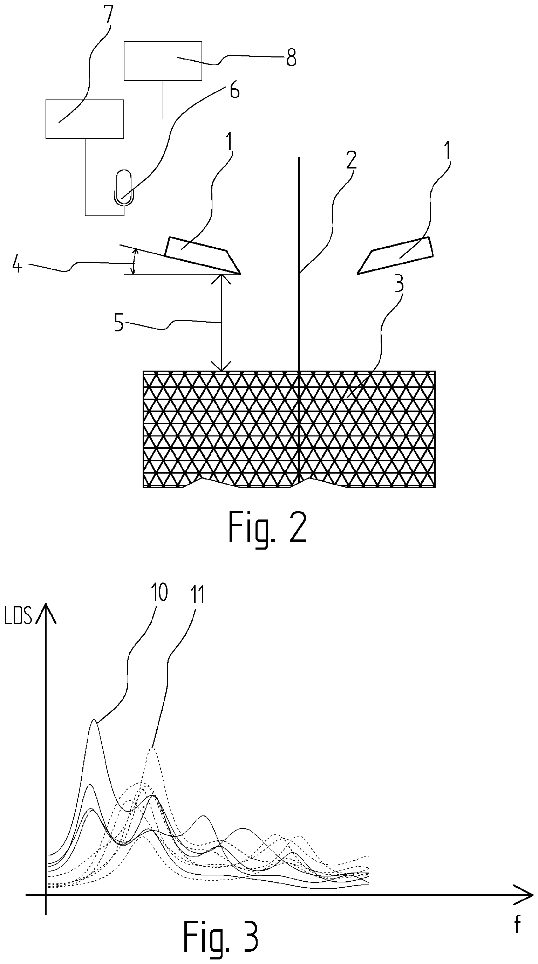

In Fig. 2 ist schematisch die Anordnung eines Air Knifes 1 gegenüber einem Metallband 2 dargestellt. Das Metallband 2 wird durch ein flüssiges Metallbad 3 geführt und danach wird das flüssige Metall, durch das beidseitig angeordnete Air Knife 1, abgestreift. Dabei gibt es verschiedene Einstellparameter des Air Knifes 1. Der Winkel 4 und der Abstand 5 zum flüssigen Metallbad sind entscheidende Parameter und müssen überwacht werden. Durch einen Meßaufnehmer 6 wird ein akustisches Signal erfasst und an die Auswerteeinrichtung 7 übermittelt, welche das Signal in einem Speicher 8 ablegt und danach entsprechend auswertet.

In der Fig. 3 sind mehrere Leistungsdichtespektrum Signale von einem Air Knifes dargestellt. Die Filterkoeffizienten des adaptiven Filters wurden in diesem Fall durch das LPC Verfahren bestimmt. Dies hat sich als vorteilhaft - für die anschließende Schwellwertbasierte Auswertung - herausgestellt.

Die Kurve 10 zeigt das Leistungsdichtespektrum bei hoher Druckeinstellung und die Kurve 11 das Leistungsdichtespektrum bei niedriger Druckeinstellung. Die Druckeinstellung lässt sich anhand der Frequenz, bei welcher das Maximum des Leistungsdichtespektrum auftritt, bestimmen.

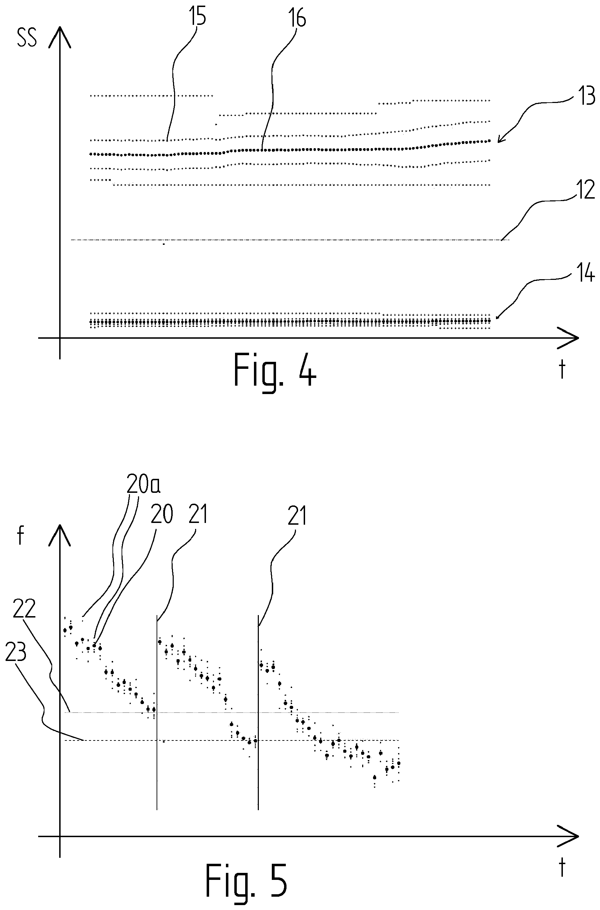

### In Fig. 4 ist eine Ausführungsvariante der

Schwellwertbasierten Auswertung dargestellt. Im konkreten Fall wird die Winkeleinstellung eines Air Knifes, durch eine Berechnung der Spektrale Schärfe, bestimmt. Die schwellwertbasierte Auswertung erfolgt anhand der Berechnung der spektralen Schärfe. Die berechneten Spektralen Schärfe Punkte 16 sind jene die beispielsweise für einen bestimmten Arbeitsschritt berechnet wurden. Es können also beispielsweise pro Arbeitsschritt fünf Leistungsdichtespektren bestimmt werden, womit diese auf der Zeitachse t zum selben Zeitpunkt aufgetragen werden und aus diesen wird dann ein Median der Spektralen Schärfe 15 bestimmt. Die Leistungsdichtespektren werden jeweils für eine bestimmte Intervalldauer, beispielsweise 50ms oder einige Sekunden, bestimmt. Die Kurve der Spektralen Schärfe 13 stellt also den Median Verlauf einer positiven Winkeleinstellung über eine Vielzahl von Arbeitsschritten dar. Die Kurve der Spektralen Schärfe 14 stellt den Median Verlauf für eine negative Winkeleinstellung eines Air Knifes dar. Durch die Grenzlinie 12 ist jener Wert der Spektralen Schärfe dargestellt, bei welcher der Winkel von negativ auf positiv wechselt.

In Fig. 5 ist eine schwellwertbasierte Auswertung anhand des Medians dargestellt. Im dargestellten Diagramm ist auf der x-Achse die Zeit und auf der y-Achse die Frequenz aufgetragen. Die auf der x-Achse dargestellte Zeit kann beispielsweise ein Arbeitsvorgang der Industrieanlage- eine Stunde, ein Tag oder eine Woche - sein. Die kleinen Punkte sind jeweils jene Frequenzen bei welchem das Maximum des Leistungsspektrums 20a auftritt. Dies bedeutet, dass beispielsweise zehn Sekunden lange Signale aufgenommen werden, nach adaptiver Filterung wird das Auswertesignal berechnet und aus diesem wird das Leistungsspektrum bestimmt. Aus dem Leistungsdichtespektrum wird danach jene Frequenz bestimmt, bei welcher eine maximale Amplitude auftritt. Dieser Vorgang wird mehrmals wiederholt, beispielsweise zehn, fünfzig oder hundert zehn Sekunden Signale werden aufgenommen und wie oben beschrieben ausgewertet. Die jeweiligen Frequenzen, bei welchen die maximale Amplitude auftritt, werden dann in dem Diagramm aufgetragen - dargestellt durch die kleinen Punkte - und aus diesen wird ein Median 20 bestimmt. Der Median 20 ist durch die dicken Punkte dargestellt. Durch ein Vorwarnlimit 22 kann ein fortgeschrittener Verschleiß angezeigt werden. Ein Alarmlimit 23 zeigt an, dass bei unterschreiten dieses Limits Wartungsmaßnahmen durchgeführt werden sollen oder müssen. Solche Wartungsmaßnahmen sind im Diagramm durch Wartungslinien 21 dargestellt. Zu den Zeitpunkten, an denen die Wartungslinien 21 im Diagramm eingezeichnet wurden, sind Wartungsmaßnahmen durchgeführt worden. Es ist ersichtlich, dass nach den Wartungsmaßnahmen der Median 20 wieder deutlich über dem Vorwarnlimit 22 liegt.

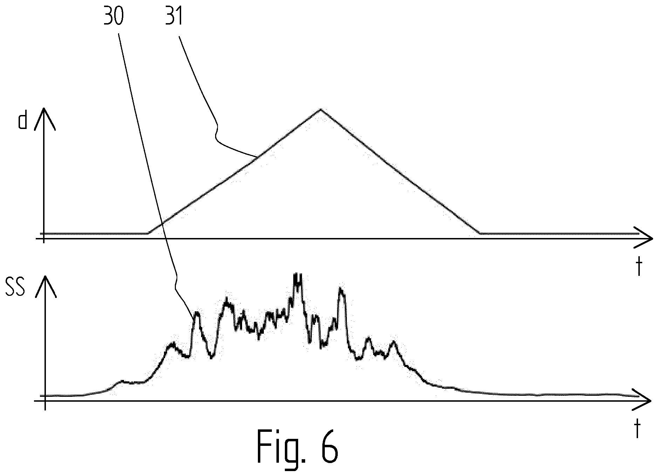

In der Fig. 6 ist die Darstellung von einer tatsächlichen Distanz 31 und einer durch Auswertung der Spektralen Schärfe bestimmter Distanz 30 eines Air Knifes zum flüssigen Metallbad dargestellt. Durch Bestimmung der spektralen Schärfe kann auf die Distanz-Änderung geschlossen werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

### Bezugszeichenliste

- 1: Air Knife
- 2: Metallband
- 3: Flüssiges Metallbad
- 4: Winkel
- 5: Abstand
- 6: Messaufnehmer
- 7: Auswerteeinrichtung
- 8: Speicher
- 10: Leistungsdichtespektrum bei hoher Druckeinstellung
- 11: Leistungsdichtespektrum bei niedriger Druckeinstellung
- 12: Grenzlinie
- 13, 14: Median der Spektralen Schärfe
- 14: Berechnete Spektrale Schärfe
- 15: Median Spektrale Schärfe
- 20: Median des Leistungsspektrums
- 20a: Maximum des Leistungsspektrums
- 21: Wartungslinien
- 22: Vorwarnlimit
- 23: Alarmlimit
- S1 ... S6: Arbeitsschritte
- SS: Spektrale Schärfe
- LDS: Leistungsdichtespektrum
- t: Zeit
- f: Frequenz
- d: Distanz

## Patentansprüche

1. Verfahren zur akustischen Überwachung einer Industrieanlage, wobei durch einen Messaufnehmer (6) ein akustisches Signal erfasst wird,
- das erfasste akustische Signal als zumindest ein Zeitsignal in einem Speicher (8) abgespeichert wird,
- wobei mittels adaptivem Filter, aus dem zumindest einen Zeitsignal zumindest ein Auswertesignal berechnet und jeweils im Speicher (8) abgespeichert wird,
- aus dem zumindest einen Auswertesignal wird zumindest ein Leistungsdichtespektrum Signal berechnet,
- und für das, zumindest eine, Leistungsdichtespektrum Signal wird durch schwellwertbasierte Auswertung in einem vordefinierten Frequenzband ein Schwellwert bestimmt und bei über- oder unterschreiten eines Grenzwertes wird ein Alarm ausgegeben, **dadurch gekennzeichnet, dass** das adaptive Filter ein Linear Predictive Coding Filter ist.

2. Verfahren zur Überwachung von Industrieanlagen, nach Anspruch 1, **dadurch gekennzeichnet, dass** die schwellwertbasierte Auswertung durch zumindest eine der nachfolgenden Methoden erfolgt: Bestimmung eines Median aus zumindest zwei Leistungsspektrum Signalen, Bestimmung einer spektralen Bandweite, Bestimmung einer spektralen Roll Off Frequenz, Bestimmung eines Effektivwert des Signals oder Bestimmung einer spektrale Schärfe.

3. Verfahren zur akustischen Überwachung von Industrieanlagen nach den Ansprüchen 1 - 2 , **dadurch gekennzeichnet, dass** der Schwellwert mit einem Referenzwert verglichen wird und daraus ein kontinuierlicher Betriebsparameter oder Betriebszustand berechnet wird.

4. Verfahren zur akustischen Überwachung von Industrieanlagen nach den Ansprüchen 1 - 3, **dadurch gekennzeichnet, dass** die Industrieanlage ein Air Knife (1) ist und ein Betriebsparameter ein Winkel (4), ein Druck oder ein Abstand (5) zum Metallbad des Air Knife ist.

5. Verfahren zur akustischen Überwachung von Industrieanlagen nach den Ansprüchen 1 - 3, **dadurch gekennzeichnet, dass** der Schwellwert mit einem Referenzwerten verglichen wird und Filterparameter des adaptiven Filters entsprechend angepasst werden.

6. Verfahren zur akustischen Überwachung von Industrieanlagen nach den Ansprüchen 1 - 5, **dadurch gekennzeichnet, dass** der Grenzwert sich während einer Dauer der Überwachung verändert.

7. Verfahren zur akustischen Überwachung von Industrieanlagen nach den Ansprüchen 1 - 6, **dadurch gekennzeichnet, dass** das akustische Signal als abgetastetes Signal mit einer Abtastrate von zumindest 44100 Hz erfasst wird.

8. Vorrichtung zur Überwachung einer Industrieanlage umfassend einen Messaufnehmer und einen Speicher, **dadurch gekennzeichnet, dass** eine Auswerteeinrichtung mit dem Messaufnehmer und dem Speicher verbunden ist, wobei die Auswerteeinrichtung dazu eingerichtet ist, das Verfahren nach den Ansprüchen 1 - 7 auszuführen.

9. Verwendung der Vorrichtung nach Anspruch 8 zum Überwachen eines Air Knife oder eines Spannwellensiebes.

10. Computerprogramm umfassend Befehle, die bewirken, dass die Vorrichtung zur Überwachung einer Anlage nach Anspruch 8 die Verfahrensschritte nach den Ansprüchen 1 - 7 ausführen.

11. Computerlesbares Medium, auf dem das Computerprogram nach Anspruch 10 gespeichert ist.

## Claims

1. Method for acoustically monitoring an industrial installation, wherein a measuring sensor (6) is used to record an acoustic signal,
- the recorded acoustic signal is stored as at least one time signal in a memory (8),
- at least one evaluation signal being calculated from the at least one time signal by means of an adaptive filter and being stored in the memory (8) in each case,
- at least one power density spectrum signal is calculated from the at least one evaluation signal,
- and threshold-based evaluation in a predefined frequency band is used to determine a threshold for the at least one power density spectrum signal and an alarm is output if a limit value is exceeded or fallen short of, **characterized in that** the adaptive filter is a linear predictive coding filter.

2. Method for monitoring industrial installations according to Claim 1, **characterized in that** the threshold-based evaluation is performed using at least one of the following methods: determining a median from at least two power spectrum signals, determining a spectral bandwidth, determining a spectral roll-off frequency, determining an RMS value of the signal or determining a spectral sharpness.

3. Method for acoustically monitoring industrial installations according to Claims 1 - 2, **characterized in that** the threshold is compared with a reference value and a continuous operating parameter or operating state is calculated therefrom.

4. Method for acoustically monitoring industrial installations according to Claims 1 - 3, **characterized in that** the industrial installation is an air knife (1) and an operating parameter is an angle (4), a pressure or a spacing (5) from the metal bath of the air knife.

5. Method for acoustically monitoring industrial installations according to Claims 1 - 3, **characterized in that** the threshold is compared with a reference value and filter parameters of the adaptive filter are adjusted accordingly.

6. Method for acoustically monitoring industrial installations according to Claims 1 - 5, **characterized in that** the limit value changes over a period of the monitoring.

7. Method for acoustically monitoring industrial installations according to Claims 1 - 6, **characterized in that** the acoustic signal is recorded as a sampled signal at a sampling rate of at least 44 100 Hz.

8. Apparatus for monitoring an industrial installation comprising a measuring sensor and a memory, **characterized in that** an evaluation device is connected to the measuring sensor and the memory, the evaluation device being configured to carry out the method according to Claims 1 - 7.

9. Use of the apparatus according to Claim 8 for monitoring an air knife or a flip-flow screen.

10. Computer program comprising instructions that cause the apparatus for monitoring an installation according to Claim 8 to carry out the method steps according to Claims 1 - 7.

11. Computer-readable medium on which the computer program according to Claim 10 is stored.

## Revendications

1. Procédé destiné à la surveillance acoustique d'une installation industrielle, dans lequel un signal acoustique est détecté par le biais d'un capteur de mesure (6),
- le signal acoustique détecté est enregistré dans une mémoire (8) comme au moins un signal temporel,
- dans lequel au moyen de filtres adaptatifs, à partir de l'au moins un signal temporel au moins un signal d'évaluation est calculé et respectivement enregistré dans la mémoire (8),
- à partir de l'au moins un signal d'évaluation au moins un signal de spectre de densité de puissance est calculé,
- et pour l'au moins un signal de spectre de densité de puissance une valeur seuil est déterminée par le biais d'une évaluation se basant sur la valeur seuil dans une bande de fréquences prédéfinie et lorsqu'une valeur limite est dépassée ou n'est pas atteinte, une alarme est émise, **caractérisé en ce que** le filtre adaptatif est un filtre à codage prédictif linéaire.

2. Procédé destiné à la surveillance d'installations industrielles, selon la revendication 1, **caractérisé en ce que** l'évaluation se basant sur la valeur seuil est effectuée par le biais d'au moins une des méthodes suivantes : détermination d'une médiane à partir d'au moins deux signaux de spectre de puissance, détermination d'une largeur de bande spectrale, détermination d'une fréquence d'atténuation spectrale, détermination d'une valeur efficace du signal ou détermination d'une acuité spectrale.

3. Procédé destiné à la surveillance acoustique d'installations industrielles selon les revendications 1-2, **caractérisé en ce que** la valeur seuil est comparée à une valeur de référence et de ce fait, un paramètre de fonctionnement ou un état de fonctionnement continu est calculé.

4. Procédé destiné à la surveillance acoustique d'installations industrielles selon les revendications 1-3, **caractérisé en ce que** l'installation industrielle est une lame d'air (1) et un paramètre de fonctionnement est un angle (4), une pression ou un espacement (5) par rapport au bain métallique de la lame d'air.

5. Procédé destiné à la surveillance acoustique d'installations industrielles selon les revendications 1-3, **caractérisé en ce que** la valeur seuil est comparée à une valeur de référence et un paramètre de filtre du filtre adaptatif est adapté en conséquence.

6. Procédé destiné à la surveillance acoustique d'installations industrielles selon les revendications 1-5, **caractérisé en ce que** la valeur limite est modifiée pendant une durée de la surveillance.

7. Procédé destiné à la surveillance acoustique d'installations industrielles selon les revendications 1-6, **caractérisé en ce que** le signal acoustique est détecté en tant que signal échantillonné avec un taux d'échantillonnage d'au moins 44 100 Hz.

8. Dispositif destiné à la surveillance d'une installation industrielle comprenant un capteur de mesure et une mémoire, **caractérisé en ce qu'**un dispositif d'évaluation est relié au capteur de mesure et à la mémoire, dans lequel le dispositif d'évaluation est conçu pour mettre en œuvre le procédé selon les revendications 1-7.

9. Utilisation du dispositif selon la revendication 8 destiné à la surveillance d'une lame d'air ou d'un tamis à arbres tendeurs.

10. Programme informatique comprenant des instructions qui amènent le dispositif destiné à la surveillance d'une installation selon la revendication 8 à mettre en œuvre les étapes de procédé selon les revendications 1-7.

11. Support lisible par ordinateur sur lequel le programme informatique selon la revendication 10 est enregistré.
